# EUROPEAN PATENT SPECIFICATION

(11) **EP 4 142 031 B1**
(45) Date of publication and mention of the grant of the patent: **15.10.2025**
(21) Application number: 22759996.6
(22) Date of filing: 21.02.2022
(51) Int. Cl.: H01M 50/342, H01M 50/30, H01M 50/204, F16K 17/16, F16K 24/04

(54) **GAS VENTING DEVICE, AND BATTERY MODULE AND BATTERY PACK COMPRISING THE SAME**
ENTGASUNGSVORRICHTUNG, UND BATTERIEMODUL UND BATTERIEPACK DAMIT
DISPOSITIF D'ÉVACUATION DES GAZ, ET MODULE DE BATTERIE ET BLOC-BATTERIE LE COMPRENANT

(30) Priority: 23.02.2021 KR 20210024310; 18.02.2022 KR 20220021761
(43) Date of publication of application: 01.03.2023
(73) Proprietor: LG Energy Solution, Ltd., Seoul 07335 (KR)
(72) Inventor: KIM, Doo Seung, Daejeon 34122 (KR); CHOO, Yeon Chul, Daejeon 34122 (KR)
(74) Representative: Plasseraud IP
(86) International application number: PCT/KR2022/002499
(87) International publication number: WO 2022/182078

(56) References cited:
- EP-A1- 3 916 900
- WO-A2-2012/027746
- JP-A- 2013 089 375
- JP-A- 2013 114 991
- JP-A- 2013 187 530
- JP-A- 2013 187 530
- JP-A- 2017 073 195
- JP-B2- 6 187 895
- KR-A- 20150 030 600
- KR-A- 20160 112 768
- KR-A- 20160 112 768
- KR-A- 20190 028 200
- KR-A- 20190 028 200
- SKORPIK JIRI: "41. Flow of gases and steam through nozzle", 1 April 2015 (2015-04-01), XP093177129, Retrieved from the Internet <URL:https://pdfcoffee.com/download/flow-through-nozzle-pdf-free.html> [retrieved on 20240620]

## Description

### [Technical Field]

The present invention relates to a gas venting device for discharging gas inside a battery module or battery pack, and a battery pack including the same.

### [Background Art]

Battery packs applied to electric vehicles and the like have a structure in which a plurality of battery modules including a plurality of secondary batteries are connected in series or in parallel to obtain high output. In addition, the secondary batteries can be repeatedly charged and discharged by an electrochemical reaction between components including positive and negative current collectors, separators, active materials, electrolytes, and the like.

A secondary battery may generate gas inside a battery packat any time while repeatedly charged and discharged, and the generated gas is called venting gas. For example, when an overcurrent flows, a temperature of the secondary battery inside the battery pack is rapidly increased. Such a rapid increase in temperature may cause a decomposition reaction of an electrolyte to generate gas. When the gas is generated from the secondary battery inside the battery pack, the gas may be collected inside the pack and the battery pack may explode, or the gas may be introduced into the interior of a vehicle or the like through a cooling duct of the battery pack or the like. Accordingly, a venting device capable of reducing the pressure in a battery pack by discharging gas inside the battery pack to the outside is provided in the battery pack.

Generally, a venting device has a structure in which a venting disk that can rupture according to internal pressure is inserted between an inlet through which gas inside a battery pack is introduced and an outlet through which the gas is discharged. However, since the conventional venting device has a simple cylindrical structure in which an inlet and outlet of gas are connected, the pressure between the inlet and the outlet is not large, and thus there is a limit to the flow rate of the gas that can be discharged.

EP3916900A1 discloses a gas venting device and battery pack comprising same. JP2017073195A discloses a pressure release valve of battery pack. JP2013187530A, which shows the preamble of claim 1, discloses an explosion-proof valve for hermetic type electrochemical device. JP6187895B2 discloses a safety valve for enclosed electrochemical device. KR20190028200A discloses a battery module with a structure to break a connector using venting gas. KR20160112768A discloses a battery pack for a vehicle. WO2012027746A2 discloses a rupture disk. JP2013114991A discloses a secondary battery.

### [Document of Related Art]

### [Patent Document]

Korean Laid-open Patent Application No. 10-2018-0039986

### [Disclosure]

### [Technical Problem]

An object of the present invention is to provide a gas venting device capable of discharging a larger flow amount per hour even with a venting disk having the same area, and a battery module and battery pack including the same.

### [Technical Solution]

The present invention is directed to providing a gas venting device, for discharging gas inside a battery module or battery pack, including a bracket having a through hole formed in a central portion thereof, and a venting disk which is fastened to the bracket while in contact with one surface of the bracket to shield the through hole and is configured to rupture when a predetermined pressure is applied, wherein a gas discharge flow path is formed in the through hole formed in the bracket, and a cross-sectional area of the gas discharge flow path is continuously or gradually reduced in a gas discharge direction.

The gas venting device according to the present invention includes a discharge guide member which is inserted into the through hole of the bracket and has a gas discharge flow path formed in a central portion thereof, wherein a cross-sectional area of the gas discharge flow path may be continuously or gradually reduced in the gas discharge direction.

In an example, the gas discharge flow path may have a truncated conical shape.

According to the invention, as a first alternative, the gas discharge flow path has a truncated conical shape in which an inclined surface formed on an inner wall of the gas discharge flow path is concavely or convexly curved and a straight flow path having a constant cross-sectional area may be formed on an outlet side of the gas discharge flow path so as to follow the truncated cone-shaped flow path.

According to the invention, as a second alternative, in the gas discharge flow path, a truncated cone-shaped flow path, in which an inclined surface formed on an inner wall thereof is concavely curved, and a truncated cone-shaped flow path, in which an inclined surface formed on an inner wall thereof is convexly curved, may be consecutively formed, as the cross-sectional area thereof is continuously reduced

According to the invention, as a third alternative, in the gas discharge flow path, a truncated cone-shaped flow path, in which an inclined surface formed on an inner wall thereof is convexly curved, and a truncated cone-shaped flow path, in which an inclined surface formed on an inner wall thereof is concavely curved, may be consecutively formed, as the cross-sectional area thereof is continuously reduced

**In** a specific example, a protrusion having a screw thread, an embossing, or a straight-line shaped pattern may be formed on an inner wall of the gas discharge flow path.

**In** an example, a fastening portion for fastening the discharge guide member to the bracket may protrude from an outer surface of the discharge guide member, and a fastening hole for screw fastening the bracket may be formed in the fastening portion.

**In** another example, the bracket may be fastened to the discharge guide member in a screw fastening manner.

In a specific example, the venting disk may be positioned downstream of the discharge guide member based on the gas discharge direction.

In a specific example, the venting disk may include a disk outer peripheral portion fastened to the bracket, and a disk inner peripheral portion which is integrally formed with the disk outer peripheral portion as one body, shields the through hole, and ruptures when the predetermined pressure is applied, wherein a notch is formed in the disk inner peripheral portion so as to rupture when the predetermined pressure is applied.

Further, the present invention provides a battery module including the gas venting device as described above.

The battery module may include a plurality of secondary batteries, and a module frame on which the secondary batteries are mounted, wherein the gas venting device as described above may be fastened to a first side of the module frame.

In an example, a first surface of the bracket opposite to a second surface of the bracket contacting the venting disk is in contact with an outer surface of the module frame.

In another example, the venting disk may be in contact with an inner surface of the module frame.

Further, the present invention provides a battery pack including the gas venting device as described above.

The battery pack may include at least one battery module including a plurality of secondary batteries, and a battery pack case including a tray on which the battery module is mounted and a pack cover that covers the battery module, wherein the gas venting device as described above may be fastened to a first side of the battery pack case.

In an example, a first surface of the bracket opposite to a second surface of the bracket in contact with the venting disk may be in contact with an outer surface of the battery pack case.

In another example the venting disk may be in contact with an inner surface of the battery pack case.

### [Advantageous Effects]

According to a gas venting device according to the present invention and a battery module or battery pack including the same, a larger flow amount can be discharged per hour even when a venting disk having the same area is used, and thus the safety of the battery module and battery pack can be improved.

### [Brief Description of the Drawings]

FIG. 1 is a perspective view of a gas venting device.
FIG. 2 is a perspective view illustrating a form in which brackets and a venting disk are fastened in a gas venting device.
FIG. 3 is a cross-sectional view illustrating a shape of a gas venting device according to a non-claimed example.
FIG. 4 is a schematic view illustrating a shape of a discharge guide member.
FIG. 5 is a cross-sectional views illustrating a shape of a gas venting device according to a non-claimed example.
FIG. 6 is a cross-sectional views illustrating a shape of a gas venting device according to an embodiment of the present invention.
FIG. 7 is a cross-sectional views illustrating a shape of a gas venting device according to still another embodiment of the present invention.
FIG. 8 is a cross-sectional views illustrating a shape of a gas venting device according to still another embodiment of the present invention.
FIG. 9 is a cross-sectional view illustrating a form in which a bracket and a discharge guide member are fastened according to a non-claimed example.
FIG. 10 is a cross-sectional view illustrating a form in which a bracket and a discharge guide member are fastened according to a non-claimed example.
FIG. 11 is a schematic view illustrating a shape of a venting disk.
FIG. 12 is a schematic views illustrating a coupling structure of a gas venting device in a battery module according to a non-claimed example.

### [Detailed Description of the Preferred Embodiments]

Hereinafter, the present invention will be described in detail with reference to the accompanying drawings. Terms and words used in this specification and claims should not be construed as being limited to commonly used meanings or meanings in dictionaries and should be construed with meanings and concepts which are consistent with the technological scope of the present invention based on the principle that the inventors have appropriately defined concepts of terms in order to describe the present invention in the best way.

It should be understood that the terms "comprise," "comprising," "include," and/or "including," when used herein, specify the presence of stated features, integers, steps, operations, elements, parts, and/or combinations thereof, but do not preclude the presence or addition of one or more other features, integers, steps, operations, elements, parts, and/or combinations thereof. In addition, when a layer, film, region, or plate is referred to as being "formed on" another element, it includes a case in which the layer, film, region, or plate is formed directly on an element and a case in which the layer, film, region, or plate is formed on the element with another element interposed therebetween. In contrast, when a layer, film, region, or plate is referred to as being "formed below" an element, it includes a case in which the layer, film, region, or plate is formed directly below the element and a case in which the layer, film, region, or plate is formed below the element with another element interposed therebetween. In addition, in the present invention, when a member is referred to as being located "on" another member, it includes a case in which a member is disposed above another member and a case in which a member is disposed below another member.

Hereinafter, the present invention will be described in detail.

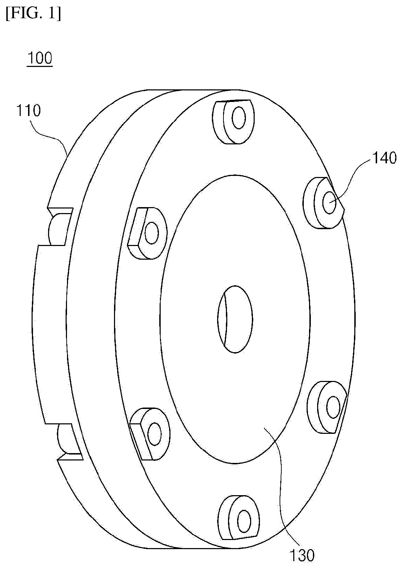

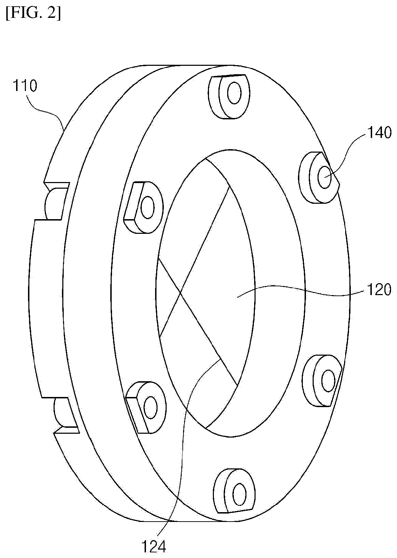

FIG. 1 is a perspective view of a gas venting device, and FIG. 2 is a perspective view illustrating a form in which brackets and a venting disk are fastened in the gas venting device.

Referring to FIGS. 1 and 2, a gas venting device 100 includes at least one bracket 110 having a through hole formed in a central portion thereof, and a venting disk 120 which is fastened to the bracket 110 while in contact with one surface of the bracket 110 to shield the through hole and is configured to rupture when a predetermined pressure is applied, wherein a gas discharge flow path is formed in the through hole formed in the bracket 110, and a cross-sectional area of the gas discharge flow path is continuously or gradually reduced in a gas discharge direction.

Generally, a plurality of battery modules are mounted in a battery pack, and a plurality of secondary batteries are embedded in each battery module. The secondary batteries generate gas due to a decomposition reaction of an electrolyte or the like as the secondary batteries are repeatedly charged and discharged. Heat generated during the charging and discharging process of the batteries promotes gas generation and expands the gas, thereby increasing the pressure inside the battery module or battery pack. When such a process continues, the battery module or the battery pack may explode or the gas inside the battery module or battery pack may be introduced into the interior of a vehicle through a duct or the like. Therefore, a venting device, in which a venting disk ruptures to discharge gas when the pressure of the gas is a predetermined value or higher, is attached.

Such gas is generally a compressible fluid whose volume changed with respect to pressure. When air flows at a high speed, pressure and density are increased in some regions, and a volume of the air is reduced. However, in the process of discharging the gas as described above, a discharging rate of the gas is small, and thus an incompressible flow phenomenon in which a change in volume according to pressure is negligible occurs. In the incompressible flow, a total pressure on a fluid is constant, and the pressure and flow rate of the fluid are inversely proportional to each other. That is, when the pressure of the fluid increases, a flow rate decreases, and when the pressure of the fluid decreases, the flow rate increases.

As described above, since the conventional venting device has a simple cylindrical structure in which an inlet and outlet of gas are connected, a difference in the pressure between the inlet and the outlet is not large, and thus there is a limit to the flow rate of the gas that can be discharged.

In contrast, when the cross-sectional area of the gas discharge flow path is continuously or gradually reduced in the gas discharge direction as in the present invention, as the flow rate of air decreases at the inlet having a large cross-sectional area, the internal pressure increases, and as the flow rate of air increases at the outlet having a small cross-sectional area, the internal pressure decreases. Accordingly, a difference in pressure between the inlet and the outlet is further increased locally, and a larger amount of gas can be discharged even when a venting disk having the same area is used. Therefore, when the internal pressure due to the gas generated inside the battery module or battery pack exceeds a reference value, the safety of the battery module and battery pack can be improved by rapidly discharging the gas.

Hereinafter, a structure of the gas venting device will be described in detail.

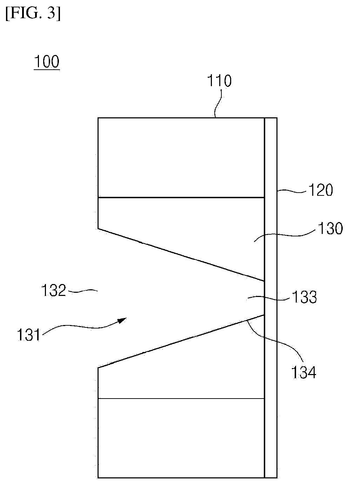

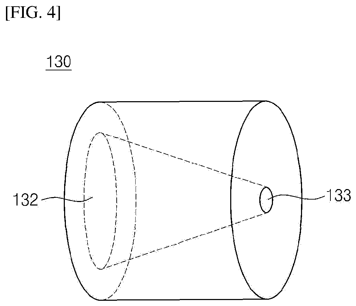

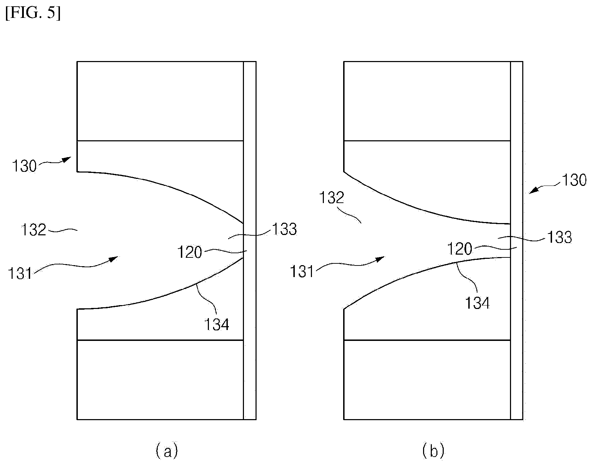

FIG. 3 is a cross-sectional view illustrating a shape of the gas venting device according to a non-claimed example, and FIG. 4 is a schematic view illustrating a shape of a discharge guide member. FIG. 5 is a cross-sectional views illustrating a shape of a gas venting device according to another non-claimed example.

Referring to FIG. 3 or 4 together with FIGS. 1 and 2, the gas venting device 100 includes a bracket 110 for fastening a venting disk 120 and discharging gas therein. Since a through hole is formed in a central portion of the bracket 110 to form a gas discharge flow path in the through hole, the bracket 110 serves not only to fasten the venting disk, but also serves as an outlet for discharging gas inside the battery pack or battery module. In the present invention, since at least one bracket 110 may be used, only one bracket may be used or a plurality of brackets may be fastened in succession, and accordingly, a length of the gas discharge flow path may be appropriately adjusted. In the bracket 110, fastening holes (not illustrated), into which bolts 140 for fastening the venting disk 120 and a discharge guide member 130, which will be described below, together and fastening the gas venting device 100 to the battery module or battery pack may be inserted, may be formed.

The venting disk 120 may be fastened to the bracket 110 while in contact with one surface of the bracket 110 to shield the through hole, and may be configured to rupture when a predetermined pressure is applied.

Meanwhile, the gas discharge flow path is formed in the through hole formed in the bracket 110. Specifically, the gas venting device 100 according to the present invention includes a discharge guide member 130 which is inserted into the through hole of the bracket 110 and has a gas discharge flow path 131 formed in a central portion thereof. The gas discharge flow path formed in the through hole may be formed by the discharge guide member 130, and in this case, a cross-sectional area of the gas discharge flow path 131 formed in the discharge guide member 130 is continuously or gradually reduced in a gas discharge direction, as illustrated in FIG. 4.

That is, the shape of the gas discharge flow path formed in the bracket 110 may be formed by forming the shape of the through hole itself, but, according to the invention, a separate discharge guide member 130 is inserted into the bracket 110 to form the gas discharge flow path as described above. The discharge guide member 130 has a detachable/attachable or replaceable structure. In the present invention, by using a separate discharge guide member 130 for the bracket 110, the gas may be smoothly discharged, parts may be easily replaced, and the shape of the flow path can be easily changed. In the present invention, in order to improve the efficiency of gas discharge, the cross-sectional area may be changed while maximizing the length of the gas discharge flow path, and the length of the discharge guide member may be configured to be identical to the length of the through hole.

Further, the gas discharge flow path 131 formed in the discharge guide member 130 may be designed, for example, to have a circular shape, as illustrated in FIG. 4. In this case, the gas discharge flow path 131 formed in the discharge guide member 130 may have a truncated conical shape. Referring to FIGS. 3 and 4, an inlet 132 and an outlet 133 of the gas discharge flow path 131 in the discharge guide member 130 each have a circular shape, and have lower and upper surfaces forming a truncated conical shape. An inner wall 134 of the gas discharge flow path 131 has a structure in which an inclined surface is formed from the inlet 132 through which the gas is introduced toward the outlet 133 through which the gas is discharged as the cross-sectional area is continuously reduced. When a cross-sectional profile of the inner wall 134 of the gas discharge flow path 131 is formed as a straight inclined surface as illustrated in FIGS. 3 and 4, a reduction rate of the cross-sectional area is constant throughout the gas discharge flow path.

Such a straight cross-sectional profile is simple, and thus it is easy to manufacture the cross-sectional profile, but when the cross-sectional profile is connected to other parts such as a pipe and the like, an angular portion may be formed on the wall of the flow path, and thus some sections in which the flow is unstable may be generated. Further, since the reduction rate of the cross-sectional area is constant, for example, when a gas whose flow is unstable is introduced from the inlet of the flow path, flow instability of the gas cannot be resolved and is highly likely to be maintained up to the outlet of the flow path. That is, the flow path having a constant reduction rate in cross-sectional area has a disadvantage in that a degree of freedom to adjust flow instability within the corresponding flow path is reduced.

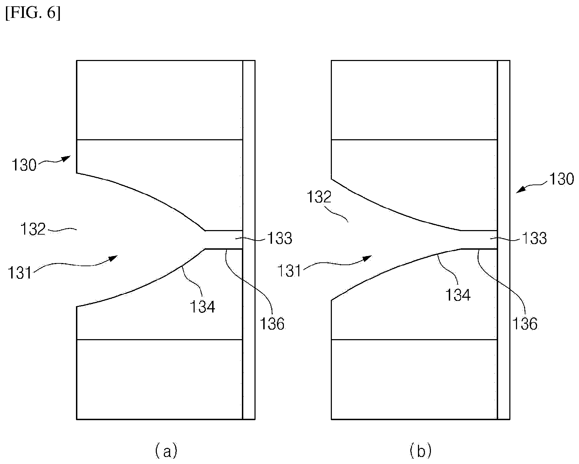

On the other hand, when the reduction rate of the cross-sectional area is changed along the flow path, there is an advantage in that the above-described flow instability may be adjusted and managed within the flow path. FIG. 5 illustrate a non-claimed example and FIGS. 6 to 8 embodiments of the gas discharge flow path.

Referring to (a) of FIG. 5, the gas discharge flow path 131 formed in the discharge guide member 130 has a truncated conical shape in which an inclined surface, along which a cross-sectional area thereof is continuously reduced toward the outlet, formed on the inner wall 134 is concavely curved. Here, the shape in which the inclined surface is concavely curved refers to a shape in which the inclined surface is recessed toward the outside of the flow path in a vertical cross section of the flow path. In this case, a reduction rate of the cross-sectional area is small near the inlet 132 through which the gas is introduced, and is increased toward the outlet 133 through which the gas is discharged. Since the gas discharge flow path 131 having the cross-sectional profile of the concave curved shape as described above has a shape in which the cross-sectional area of the flow path on the outlet 133 side is rapidly reduced, a pressure difference (differential pressure) between the inlet 132 of the flow path and the outlet 133 of the flow path may be increased. That is, as compared to the gas discharge flow path 131 of the embodiment of FIGS. 3 and 4 having the straight inclined surface, the flow path of may achieve a greater differential pressure between the inlet and the outlet. This means that even when a length of the flow path is shortened, a desired differential pressure may be easily obtained. Therefore, when the same differential pressure as the gas discharge flow path 131 having the straight inclined surface of FIGS. 3 and 4 is achieved, the gas venting device may be configured with a flow path having a shorter length than that of the example of FIGS. 3 and 4.

Further, referring to (b) of FIG. 5, the gas discharge flow path 131 formed in the discharge guide member 130 has a truncated conical shape in which an inclined surface, along which a cross-sectional area thereof is continuously reduced toward the outlet, formed on the inner wall 134 is convexly curved. Here, the shape in which the inclined surface is convexly curved refers to a shape in which the inclined surface protrudes toward the center of the flow path in a vertical cross section of the flow path. In this case, a reduction rate of the cross-sectional area is large near the inlet 132 through which the gas is introduced, and is reduced toward the outlet 133 through which the gas is discharged. The gas discharge flow path 131 having the cross-sectional profile of the convex curved shape of (b) of FIG. 5 also has a reduction rate of the cross-sectional area, which is greater than that of the gas discharge flow path having the straight inclined surface, similar to the flow path of (a) of FIG. 5. Therefore, since a greater differential pressure may be achieved between the inlet and the outlet, the gas venting device may be configured with a shorter flow path length. In particular, in the gas discharge flow path 131 of (b) of FIG. 5, the flow path on the outlet 133 side has a shape in which the cross-sectional area is relatively gently reduced as compared to the flow path having the straight inclined surface. The flow path having such a shape has an advantage of achieving high flow stability because a change in physical quantity inside the flow path is gentle.

Meanwhile, as described above, in order to achieve both of effects of increasing the difference in pressure between the inlet and the outlet and increasing flow stability, the cross-sectional profile of the gas discharge flow path 131 may be configured in a form in which a curve and a straight line are combined as illustrated in FIG. 6.

Referring to (a) of FIG. 6, a straight flow path 136 having a constant cross-sectional area is formed on the side of an outlet 133 of a gas discharge flow path 131, which follows a truncated cone-shaped flow path in which an inclined surface of the gas discharge flow path 131 is concave. In the present embodiment, in the concave truncated cone-shaped flow path of the gas discharge flow path 131, a larger pressure difference may be achieved due to a reduction in cross-sectional area, and in the straight flow path 136 on the outlet side, the discharge gas may be stably discharged by designing a slope of an inner wall to be parallel to the gas flow direction.

Referring to (b) of FIG. 6, a straight flow path 136 having a constant cross-sectional area is formed on the side of the outlet 133 of the gas discharge flow path, which follows the truncated cone-shaped flow path in which the inclined surface of the gas discharge flow path 131 is convex. As above, in the present embodiment, in the convex truncated cone-shaped flow path of the gas discharge flow path 131, a larger pressure difference may also be achieved due to a reduction in cross-sectional area, and in the straight flow path 136 on the outlet side, the discharge gas may be stably discharged by designing a slope of an inner wall to be parallel to the gas flow direction.

In particular, the gas venting device 100 having the discharge guide member 130 of the embodiment of FIG. 6 has a structure in which the gas is finally discharged through the flow path parallel to the gas flow direction while a curvature or cross-sectional area of the gas discharge flow path 131 is continuously reduced. Therefore, even when the flow of the gas introduced into the inlet 132 of the flow path is initially unstable, the flow instability of the gas may be resolved while the gas passes through the corresponding flow path, and thus the gas may stably flow at the outlet 133.

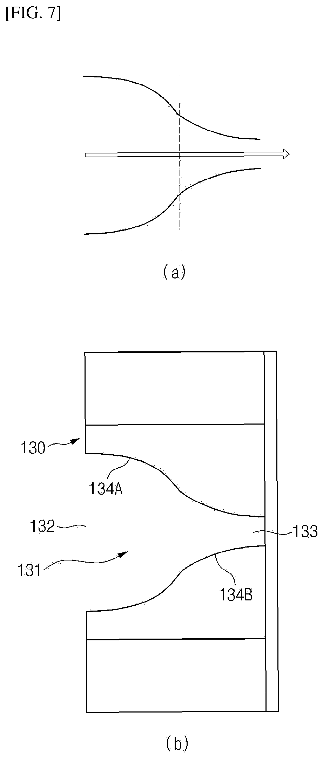

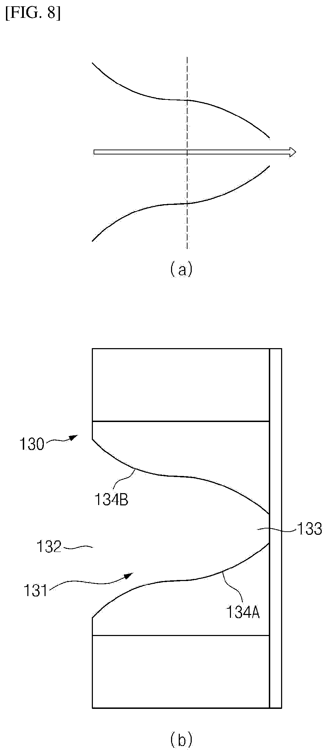

Further, in order to achieve both of effects of increasing the difference in pressure between the inlet and the outlet and increasing the flow stability, the gas discharge flow path 131 may be configured in a form in which curves having different curvatures are combined, as illustrated in FIGS. 7 and 8.

In (a) of FIG. 7, a schematic cross-sectional profile of a complex flow path is illustrated in which a gas discharge flow path having a continuously reduced overall cross-sectional area is formed, and a truncated cone-shaped flow path 134A, in which an inclined surface is concave, and a truncated cone-shaped flow path 134B, in which an inclined surface is convex, are consecutively formed. In (b) of FIG. 7, a gas venting device 100 having a cross-sectional profile of a complex flow path is disclosed.

The flow path of FIG. 7 is basically the same as the above-described embodiment in that the cross-sectional area is continuously reduced from the inlet 132 toward the outlet 133 of the gas discharge flow path 131. Therefore, as compared to the conventional gas venting device in which the cross-sectional area is not reduced, a difference in pressure between the inlet and the outlet is increased locally, and thus a larger amount of gas may be discharged even when a venting disk having the same area is used.

In addition to the above effects, since the gas discharge flow path 131 of FIG. 7 has the concave inclined surface and the convex inclined surface which are consecutively formed, a reduction rate of the cross-sectional area may be further increased, and thus the difference in pressure between the inlet and the outlet may be further increased based on the same flow path. Accordingly, it is possible to further increase the discharge flow rate of the gas. Further, since the outlet 133 has a flow path having a convex inclined surface with a relatively gentle curve, it is possible to improve the flow stability of the gas.

In (a) of FIG. 8, a schematic cross-sectional profile of a complex flow path is illustrated in which a gas discharge flow path 131 having a continuously reduced overall cross-sectional area is formed, and a truncated cone-shaped flow path 134B in which an inclined surface is convex, and a concave truncated cone-shaped flow path 134A in which an inclined surface is concave, are consecutively formed. In (b)of FIG. 8, a gas venting device having the cross-sectional profile of the complex flow path is disclosed. That is, the gas venting device of FIG. 8 includes a gas discharge flow path with an arrangement opposite to that of FIG. 7.

Since the cross-sectional area of the flow path of FIG. 8 is also continuously reduced from the inlet 132 toward the outlet 133 of the gas discharge flow path, a difference in pressure between the inlet and the outlet is increased locally, and thus a larger amount of gas can be discharged even when a venting disk having the same area is used.

Further, since the gas discharge flow path 131 of FIG. 8 has the convex inclined surface and the concave inclined surface which are sequentially formed, a reduction rate of the cross-sectional area may be increased, and thus the difference in pressure between the inlet and the outlet may be further increased based on the same flow path. Accordingly, it is possible to further increase the discharge flow rate of the gas. Further, since the gas discharge flow path 131 has a flow path having an inclined surface with a relatively gentle curve as a whole, it is possible to further improve the flow stability of the gas.

The venting devices of FIGS. 7 and 8 include a complex flow path having inclined surfaces with different curvatures. Therefore, for example, even when the flow stability of the gas is initially reduced, the flow stability of the gas can be improved at the outlet according to a curvature while the gas passes through the flow path. At the same time, the difference in pressure between the inlet 132 and the outlet 133 may be increased by varying the curvature of the flow path. The complex flow path of FIG. 7 may be an example in which a pressure difference and flow stability are considered in good balance, whereas the complex flow path of FIG. 8 may be an example in which flow stability is further considered. **In** any case, since the flow of the gas may be adjusted in the corresponding flow path, there is an advantage in that the degree of freedom for adjusting flow instability is excellent.

In addition to the above-described example, in the discharge guide member, the shape of the flow path formed therein may be designed in various forms according to safety standards of battery packs.

Further, the cross-sectional area of the outlet 133 of the gas discharge flow path 131 may be appropriately selected according to structures of the battery module and a battery pack or safety conditions to be achieved, but may range from 40% to 80% of the cross-sectional area of the inlet 132. Specifically, the cross-sectional area of the outlet may range from 50 to 70% of the cross-sectional area of the inlet, and more specifically, may range from 55 to 65%. When the cross-sectional area of the outlet is less than 40% of the cross-sectional area of the inlet, the outlet is too narrow. On the other hand, when the cross-sectional area of the outlet exceeds 80% of the cross-sectional area of the inlet, a difference in cross-sectional area between the inlet and the outlet is excessively reduced and a pressure difference between the inlet and the outlet is reduced, and thus the efficiency of gas venting is reduced.

Further, a pattern (not illustrated) for assisting gas discharge may be formed on the inner wall 134 of the gas discharge flow path 131. For example, the pattern may have a shape of a protrusion having a screw thread, an embossing, or a straight-line shaped pattern parallel to the gas discharge direction. Specifically, the pattern may be formed in the form of a screw thread protrusion surrounding the inside of the flow path along the inner wall of the flow path. Such a pattern may promote the discharge of the gas.

Meanwhile, since the discharge guide member is fastened to the bracket, stable gas discharge may be promoted even during gas venting.

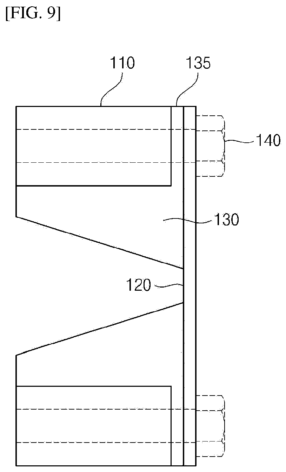

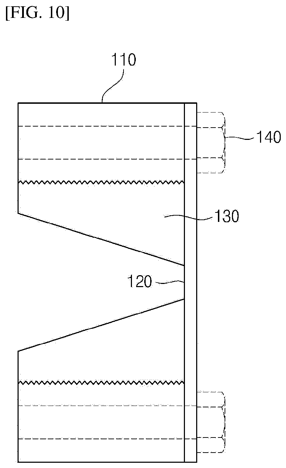

FIG. 9 is a cross-sectional view illustrating a form in which a bracket and a discharge guide member are fastened according to a non-claimed example, and FIG. 10 is a cross-sectional view illustrating a form in which a bracket and a discharge guide member are fastened according to a non-claimed example.

In an example, a bracket 110 and a discharge guide member 130 may be fastened by bolt fastening. In this case, as illustrated in FIG. 9, a fastening portion 135 for fastening the discharge guide member 130 to the bracket 110 protrudes from an outer surface of the discharge guide member 130. Since the discharge guide member 130 should be inserted into a through hole in the bracket 110, a cross section of the discharge guide member 130 has a shape corresponding to a shape of the through hole, and the fastening portion 135 have a plate-like protrusion shape that protrudes along an outer periphery thereof in a shape similar to an outer periphery of a venting disk 120. A fastening hole (not illustrated) for bolt fastening with the bracket 110 is formed in the fastening portion 135, and the fastening hole formed in the fastening portion 135 is formed at the same position as the fastening hole formed in the bracket 110, and is fixed by bolt insertion.

Meanwhile, a position at which the fastening portion 135 is formed may be appropriately designed. For example, as illustrated in FIG. 9, the fastening portion 135 may be formed to be disposed between the bracket 110 and the venting disk 120. Alternatively, the fastening portion 135 may be formed in contact with asurface opposite to a surface of the bracket 110 in contact with the venting disk 120.

In another example, the bracket 110 may be fastened to the discharge guide member 130 in a screw fastening manner. In this case, as illustrated in FIG. 10, screw threads for screw fastening may be formed on an inner wall of the bracket 110 and on an outer surface of the discharge guide member 130, and accordingly, the bracket 110 may be fastened to the discharge guide member 130 in the same way as a nut and a bolt are fastened. In this way, when the discharge guide member 130 is fastened to the bracket 110 in a screw fastening manner, the insertion of a separate bolt is not required, and thus a structure and fastening method of parts may be simplified and the discharge guide member 130 may be firmly fixed to the bracket 110.

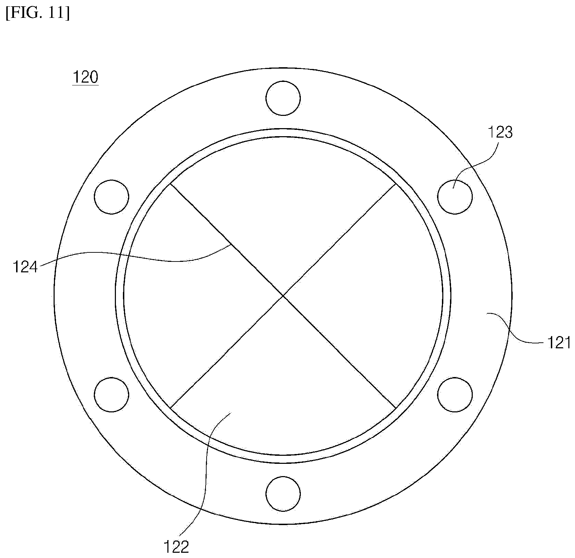

FIG. 11 is a schematic view illustrating a shape of a venting disk according to the present invention.

As described above, the venting disk 120 may be fastened to the bracket 110 while in contact with one surface of the bracket 110 to shield the through hole, and may be configured to rupture when the predetermined pressure is applied.

In this case, the venting disk 120 may be positioned downstream than the discharge guide member 130 based on the gas discharge direction. That is, the venting disk 120 is in contact with the outlet 133 of the gas discharge flow path 131 formed in the discharge guide member 130. In this case, since the venting disk 120 is positioned on an outermost surface of the gas venting device 100, the venting disk 120 may be easily replaced when the venting disk 120 is damaged. In addition, when the venting disk 120 ruptures due to gas discharge, pieces caused by the rupture may be blocked by the discharge guide member, and thus the pieces of the venting disk 120 may be prevented from being introduced into the battery module or the battery pack. In the case in which the venting disk 120 is positioned in contact with the inlet of the gas discharge flow path, when an area of a ruptured portion when the venting disk 120 ruptures is smaller than an area of the inlet of the gas discharge flow path 131, the flow of the discharged gas may be hindered. In contrast, in the present invention, since an area of the outlet 133 of the gas discharge flow path is smaller than the area of the inlet, the possibility that the gas discharge flow is hindered may be reduced even when the area of the ruptured portion of the venting disk 120 is small.

Meanwhile, the venting disk 120 includes a disk outer peripheral portion 121 which is fastened to the bracket, and a disk inner peripheral portion 122 which is integrally formed with the disk outer peripheral portion 121 as one body, shields the through hole, and ruptures when a predetermined pressure is applied.

The disk outer peripheral portion 121 is a portion for fixing the bracket and the venting disk and is in contact with the bracket. The disk outer peripheral portion 121 may include bolt through holes 123 in a circumferential direction, and the disk outer peripheral portion 121 and the bracket 110 may be integrally coupled through a bolt fastening method.

The disk inner peripheral portion 122 is made of a metal or plastic material that can rupture when a predetermined pressure is applied. For example, the disk inner peripheral portion 122 may be formed of a thin metal or plastic material, such as copper, aluminum, or stainless steel. The disk inner peripheral portion 122 may be appropriately selected according to pressure conditions at the time of rupture, and the scope of the present invention is not limited thereto.

The disk inner peripheral portion 122 prevents moisture or foreign substances from penetrating into the battery pack by blocking the through hole formed in the bracket 110 under normal conditions. However, when a large amount of gas is generated from the battery pack, the pressure inside the battery pack is increased, and the pressure acts as a force to rupture the disk inner peripheral portion 122. In this case, since the pressure inside the battery module or the battery pack is higher than an atmosphere pressure outside, the gas inside battery module may be discharged to the outside of the battery module or the battery pack due to a negative pressure.

A notch 124 is formed in the disk inner peripheral portion 122 so as to rupture when a predetermined pressure is applied. The notch 124 is formed by being partially cut out from a surface of the venting disk 120 in a thickness direction. The notch 124 may be designed to have a shape such as a cross shape, a circular shape, a quadrangular shape, a U shape, an elliptical shape, an arc shape, or the like, and the notch 124 may have a cross section having a shape such as a trapezoidal shape, a V shape, a quadrangular shape, an arc shape, or the like. The shape of the notch 124 formed in the disk inner peripheral portion 122 is not necessarily limited thereto, and the notch 124 may have various shapes. For example, the notch 124 may have an X-shape as illustrated in FIG. 2. In this case, even when the disk inner peripheral portion ruptures, pieces of the disk inner peripheral portion 122 that has ruptured may be coupled to the disk outer peripheral portion 121 without being completely separated. When the pieces of the disk inner peripheral portion 122 that has ruptured are completely separated from the venting disk 120 and fall off, it is difficult to remove the pieces and it is possible to damage other parts.

Further, a disk pad (not illustrated) may be interposed between the bracket 110 and the venting disk 120. The disk pad may be provided to have a shape corresponding to the disk outer peripheral portion, an annular shape, or a ring shape. The disk pad is provided to increase the airtightness between the bracket and the venting disk and prevent damage to the disk outer peripheral portion. For example, the disk pad may be formed of a rubber material having elasticity or the like.

Further, the present invention provides a battery module including the gas venting device as described above.

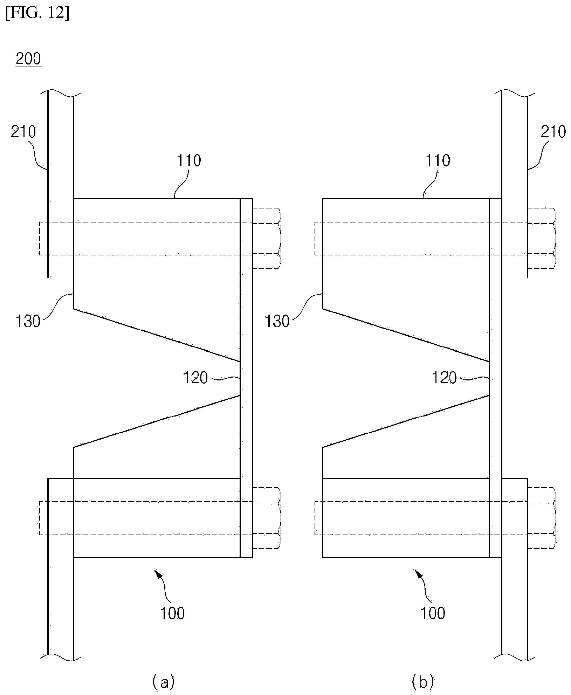

FIG. 12 is a schematic views s illustrating a coupling structure of a gas venting device in a battery module according to a non-claimed example.

Referring to FIG. 12, a battery module 200 includes a plurality of secondary batteries (not illustrated), and a module frame 210 on which the secondary batteries are mounted, wherein the gas venting device 100 as described above is fastened to one side of the module frame 210.

Specifically, the secondary battery has a form in which an electrode assembly in which a positive electrode, a negative electrode, and a separation film are alternately stacked is mounted in a cell case together with an electrolyte. Since a configuration of the secondary battery is clear to those skilled in the art to which the present invention pertains, a more detailed description thereof will be omitted.

In an example, the gas venting device 100 may be fastened to the module frame 210 in a state in which a surface opposite to a surface of the bracket 110 in contact with the venting disk 120 is in contact with an outer surface of the module frame 210, as illustrated in (a) of FIG. 12. In this case, the gas venting device 100 is fastened to the outside of the battery module. In the specification of the present invention, the inner surface of the module frame 210 refers to a surface facing an inner space in which the secondary batteries are mounted, and the outer surface refers to a surface at which the module frame 210 is exposed to the outside. In the module frame 210, holes corresponding to the fastening holes, which are formed in the fastening portion (not illustrated) of the bracket 110 and the discharge guide member 130, and the bolt through holes 123 of the venting disk 120, may be formed, and thus the bracket 110, the venting disk 120, and the discharge guide member 130 may be fixed to the module frame by bolt fastening one time. Furthermore, in the module frame 210, a hole having a size corresponding to the inlet of the gas discharge flow path 131 formed in the through hole, which is formed in the bracket 110 or the discharge guide member 130, may be formed, and thus the generated gas may be discharged.

In another example, the gas venting device 100 may be fastened to the module frame 210 in a state in which the venting disk 120 is in contact with the inner surface of the module frame 210, as illustrated in (b) of FIG. 12. In this case, the venting disk 120 is fastened between module frame 210 and the bracket 110, and the gas venting device 100 is fastened to the inside of the battery module 200.

Meanwhile, the battery module 200 may further include a sealing member (not illustrated) for sealing a gap between the module frame 210 and an outer periphery of the gas venting device 100. The sealing member may include a rubber ring or a silicone resin, and may be installed in a gap between the gas venting device and the module frame to seal the battery module.

Further, the present invention provides a battery pack including the gas venting device as described above.

The battery pack includes at least one battery module including a plurality of secondary batteries, and a battery pack case including a tray on which the battery module is mounted and a pack cover that covers the battery module, wherein the gas venting device as described above may be fastened to one side of the battery pack case.

In this case, the gas venting device may be fastened to the battery pack case in the same manner as described above.

In an example, the gas venting device may be fastened to the battery pack case in a state in which a surface opposite to a surface of the bracket in contact with the venting disk is in contact with the outer surface of the battery pack case. In this case, the gas venting device is fastened to the outside of the battery pack. In the battery pack case, the holes corresponding to the fastening holes, which are formed in the fastening portion (not illustrated) of the bracket and the discharge guide member, and the bolt through holes of the venting disk, may be formed, and thus the bracket, the venting disk, and the discharge guide member may be fixed to the battery pack case by bolt fastening one time. Furthermore, in the battery pack case, the hole having a size corresponding to the inlet of the gas discharge flow path formed in the through hole formed in the bracket or in the discharge guide member may be formed, and thus the gas generated in the battery pack may be discharged.

**In** another example, the gas venting device may be fastened to the battery pack case in a state in which the venting disk is in contact with the inner surface of the battery pack case. **In** this case, the venting disk is fastened between the battery pack case and the bracket, and the gas venting device is fastened to the inside of the battery pack.

Similarly, the battery pack may include a sealing member for sealing a gap between the battery pack case and an outer periphery of the gas venting device. Specifically, the sealing member may include a rubber ring or a silicone resin, and may be installed in a gap between the gas venting device and the battery pack case to seal the battery pack. That is, in a state in which the inside of the battery pack according to the present invention is sealed, when the internal pressure exceeds a reference value, the venting disk may rupture and the gas inside the battery pack may be discharged to the outside, and as the cross-sectional area of the flow path is continuously or gradually reduced in the gas discharge direction, a larger amount of gas may be discharged.

While the present invention has been particularly described with reference to exemplary embodiments, it will be understood by those of skilled in the art that various changes in form and details may be made without departing from the scope of the present invention. Therefore, the embodiments disclosed above and in the accompanying drawings should be considered in a descriptive sense only and not for purposes of limitation. The scope of the present invention is defined not by the detailed description of the present invention but by the appended claims.

Meanwhile, in this specification, terms indicating directions such as up, down, left, right, front, and back are used, and it should be clear that these terms are for convenience of description only, and may vary depending on the position of the object or the position of the observer.

### (Reference Numerals)

100: GAS VENTING DEVICE
110: BRACKET
120: VENTING DISK
121: DISK OUTER PERIPHERAL PORTION
122: DISK INNER PERIPHERAL PORTION
123: BOLT THROUGH HOLE
124: NOTCH
130: DISCHARGE GUIDE MEMBER
131: GAS DISCHARGE FLOW PATH
132: INLET
133: OUTLET
134: INNER WALL
134A: FLOW PATH WITH CONCAVE INCLINED SURFACE
134B: FLOW PATH WITH CONVEX INCLINED SURFACE
136: STRAIGHT FLOW PATH
135: FASTENING PORTION
140: BOLT
200: BATTERY MODULE
210: MODULE FRAME

## Claims

1. A gas venting device, for discharging gas inside a battery module or battery pack, (100) comprising:
a bracket (110) having a through hole formed in a central portion thereof;
a venting disk (120) which is fastened to the bracket while in contact with one surface of the bracket to shield the through hole and is configured to rupture when a predetermined pressure is applied,
wherein a gas discharge flow path is formed in the through hole formed in the bracket, and a cross-sectional area of the gas discharge flow path is continuously or gradually reduced in a gas discharge direction; and
a discharge guide member (130) which is inserted into the through hole of the bracket and has a gas discharge flow path (131) formed in a central portion thereof,
wherein a cross-sectional area of the gas discharge flow path is continuously or gradually reduced in the gas discharge direction,
**characterized in that** the gas discharge flow path has a truncated conical shape in which an inclined surface formed on an inner wall (134) of the gas discharge flow path is concavely or convexly curved and a straight flow path (136) having a constant cross-sectional area is formed on an outlet (133) side of the gas discharge flow path so as to follow the truncated cone-shaped flow path,
or **characterized in that** in the gas discharge flow path, a truncated cone-shaped flow path (134A), in which an inclined surface formed on an inner wall thereof is concavely curved, and a truncated cone-shaped flow path (134B), in which an inclined surface is convexly curved, are consecutively formed, as the cross-sectional area thereof is continuously reduced,
or **characterized in that** in the gas discharge flow path, a truncated cone-shaped flow path, in which an inclined surface formed on an inner wall thereof is convexly curved, and a truncated cone-shaped flow path, in which an inclined surface is concavely curved, are consecutively formed, as the cross-sectional area thereof is continuously reduced.

2. The gas venting device of claim 1, wherein the gas discharge flow path has a truncated conical shape.

3. The gas venting device of claim 1, wherein a protrusion having a screw thread, an embossing, or a straight-line shaped pattern is formed on an inner wall of the gas discharge flow path.

4. The gas venting device of claim 1, wherein:
a fastening portion (135) for fastening the discharge guide member to the bracket protrudes from an outer surface of the discharge guide member; and
a fastening hole for screw fastening the bracket is formed in the fastening portion.

5. The gas venting device of claim 1, wherein the bracket is fastened to the discharge guide member in a screw fastening manner.

6. The gas venting device of claim 1, wherein the venting disk is positioned downstream of the discharge guide member based on the gas discharge direction.

7. The gas venting device of claim 1, wherein the venting disk includes:
a disk outer peripheral portion (121) fastened to the bracket; and
a disk inner peripheral portion (122) which is integrally formed with the disk outer peripheral portion as one body, shields the through hole, and ruptures when the predetermined pressure is applied,
wherein a notch (134) is formed in the disk inner peripheral portion so as to rupture when the predetermined pressure is applied.

8. A battery module (200) comprising:
a plurality of secondary batteries; and
a module frame (210) on which the secondary batteries are mounted,
a gas venting device according to any one claim of claims 1 to 7, wherein the gas venting device is fastened to a first side of the module frame.

9. The battery module of claim 8, wherein a first surface of the bracket opposite to a second surface of the bracket contacting the venting disk is in contact with an outer surface of the module frame.

10. The battery module of claim 8, wherein the venting disk is in contact with an inner surface of the module frame.

11. The battery module of claim 8, further comprising a sealing member for sealing a gap between the module frame and an outer periphery of the gas venting device.

12. A battery pack comprising:
at least one battery module including a plurality of secondary batteries; and
a battery pack case including a tray on which the battery module is mounted and a pack cover that covers the battery module,
a gas venting device according to any one claim of claims 1 to 7, wherein the gas venting device is fastened to a first side of the battery pack case.

13. The battery pack of claim 12, wherein a first surface of the bracket opposite to a second surface of the bracket in contact with the venting disk is in contact with an outer surface of the battery pack case.

14. The battery pack of claim 12, wherein the venting disk is in contact with an inner surface of the battery pack case.

15. The battery pack of claim 12, wherein further comprising a sealing member configured to seal a gap between the battery pack case and an outer periphery of the gas venting device.

## Patentansprüche

1. Gasentlüftungsvorrichtung zum Abführen von Gas innerhalb eines Batteriemoduls oder eines Batteriepacks, (100) umfassend:
eine Halterung (110), welche ein Durchgangsloch aufweist, welches in einem zentralen Abschnitt davon gebildet ist;
eine Entlüftungsscheibe (120), welche an der Halterung befestigt ist, während sie mit einer Fläche der Halterung in Kontakt steht, um das Durchgangsloch abzuschirmen, und dazu eingerichtet ist, zu brechen, wenn ein vorbestimmter Druck aufgebracht ist,
wobei ein Gasabführströmungsweg in dem Durchgangsloch gebildet ist, welches in der Halterung gebildet ist, und ein Querschnittsbereich des Gasabführströmungsweges kontinuierlich oder graduell in einer Gasabführrichtung verringert ist; und
ein Abführführungsmittel (130), welches in das Durchgangsloch der Halterung eingeführt ist und einen Gasabführströmungsweg (131) aufweist, welcher in einem zentralen Abschnitt davon gebildet ist,
wobei ein Querschnittsbereich des Gasabführströmungsweges kontinuierlich oder graduell in einer Gasabführrichtung verringert ist,
**dadurch gekennzeichnet, dass** der Gasabführströmungsweg eine abgestumpfte konische Form aufweist, in welcher eine geneigte Fläche, welche an einer inneren Wandung (134) des Gasabführströmungsweges gebildet ist, konkav oder konvex gekrümmt ist, und ein gerader Strömungsweg (136), welcher einen konstanten Querschnittsbereich aufweist, an einer Auslass-(133)-Seite des Gasabführströmungsweges gebildet ist, um dem abgestumpften konusförmigen Strömungsweg zu folgen,
oder **dadurch gekennzeichnet, dass**, in dem Gasabführströmungsweg, ein abgestumpfter konusförmiger Strömungsweg (134A), in welchem eine geneigte Fläche, welche an einer inneren Wandung davon gebildet ist, konkav gekrümmt ist, und ein abgestumpfter konusförmiger Strömungsweg (134B), in welchem eine geneigte Fläche konvex gekrümmt ist, nacheinander gebildet sind, während der Querschnittsbereich davon kontinuierlich verringert wird,
oder **dadurch gekennzeichnet, dass**, in dem Gasabführströmungsweg, ein abgestumpfter konusförmiger Strömungsweg, in welchem eine geneigte Fläche, welche an einer inneren Wandung davon gebildet ist, konvex gekrümmt ist, und ein abgestumpfter konusförmiger Strömungsweg, in welchem eine geneigte Fläche konkav gekrümmt ist, nacheinander gebildet sind, während der Querschnittsbereich davon kontinuierlich verringert wird.

2. Gasentlüftungsvorrichtung nach Anspruch 1, wobei der Gasabführströmungsweg eine abgestumpfte konische Form aufweist.

3. Gasentlüftungsvorrichtung nach Anspruch 1, wobei ein Vorsprung, welcher ein Schraubengewinde, eine Prägung oder ein geradlinig geformtes Muster aufweist, an einer inneren Wandung des Gasabführströmungsweges gebildet ist.

4. Gasentlüftungsvorrichtung nach Anspruch 1, wobei:
ein Befestigungsabschnitt (135) zum Befestigen des Abführführungselements an der Halterung von einer äußeren Fläche des Abführführungselements absteht; und
ein Befestigungsloch zum Schraubbefestigen der Halterung in dem Befestigungsabschnitt gebildet ist.

5. Gasentlüftungsvorrichtung nach Anspruch 1, wobei die Halterung an dem Abführführungselement in einer Schraubenbefestigungsweise befestigt ist.

6. Gasentlüftungsvorrichtung nach Anspruch 1, wobei die Entlüftungsscheibe stromabwärts des Abführführungselements auf Grundlage der Gasabführrichtung positioniert ist.

7. Gasentlüftungsvorrichtung nach Anspruch 1, wobei die Entlüftungsscheibe umfasst:
einen Scheiben-Außenumfangsabschnitt (121), welcher an der Halterung befestigt ist; und
einen Scheiben-Innenumfangsabschnitt (122), welcher mit dem Scheiben-Außenumfangsabschnitt als ein Körper integral gebildet ist, das Durchgangsloch abschirmt und bricht, wenn der vorbestimmte Druck aufgebracht ist,
wobei eine Nut (134) in dem Scheiben-Innenumfangsabschnitt gebildet ist, um zu brechen, wenn der vorbestimmte Druck aufgebracht ist.

8. Batteriemodul (200), umfassend:
eine Mehrzahl von Sekundärbatterien; und
einen Modulrahmen (210), an welchem die Sekundärbatterien angebracht sind,
eine Gasentlüftungsvorrichtung nach einem der Ansprüche 1 bis 7, wobei die Gasentlüftungsvorrichtung an einer ersten Seite des Modulrahmens befestigt ist.

9. Batteriemodul nach Anspruch 8, wobei eine erste Fläche der Halterung, welche entgegengesetzt zu einer zweiten Fläche der Halterung ist, welche mit der Entlüftungsscheibe in Kontakt steht, mit einer äußeren Fläche des Modulrahmens in Kontakt steht.

10. Batteriemodul nach Anspruch 8, wobei die Entlüftungsscheibe mit einer inneren Fläche des Modulrahmens in Kontakt steht.

11. Batteriemodul nach Anspruch 8, ferner umfassend ein Abdichtungselement zum Abdichten eines Spalts zwischen dem Modulrahmen und einem äußeren Umfang der Gasentlüftungsvorrichtung.

12. Batteriepack, umfassend:
wenigstens ein Batteriemodul, welches eine Mehrzahl von Sekundärbatterien umfasst; und
ein Batteriepackgehäuse, welches eine Schale, auf welcher das Batteriemodul angebracht ist, und eine Packabdeckung umfasst, welche das Batteriemodul abdeckt,
eine Gasentlüftungsvorrichtung nach einem der Ansprüche 1 bis 7, wobei die Gasentlüftungsvorrichtung an einer ersten Seite des Batteriepackgehäuses befestigt ist.

13. Batteriepack nach Anspruch 12, wobei eine erste Fläche der Halterung, welche entgegengesetzt zu einer zweiten Fläche der Halterung ist, welche mit der Entlüftungsscheibe in Kontakt steht, mit einer äußeren Fläche des Batteriepackgehäuses in Kontakt steht.

14. Batteriepack nach Anspruch 12, wobei die Entlüftungsscheibe mit einer inneren Fläche des Batteriepackgehäuses in Kontakt steht.

15. Batteriepack nach Anspruch 12, ferner umfassend ein Abdichtungselement, welches dazu eingerichtet ist, einen Spalt zwischen dem Batteriepackgehäuse und einem äußeren Umfang der Gasentlüftungsvorrichtung abzudichten.

## Revendications

1. Dispositif d'évent de gaz, pour décharger du gaz à l'intérieur d'un module de batterie ou d'un bloc-batterie (100) comprenant :
un support (110) présentant un trou traversant formé dans une partie centrale de celui-ci ;
un disque d'évent (120) qui est fixé au support en contact avec une surface du support pour protéger le trou traversant et est conçu pour se rompre lorsqu'une pression prédéterminée est appliquée,
dans lequel un trajet d'écoulement de décharge de gaz est formé dans le trou traversant formé dans le support, et une zone de section transversale du trajet d'écoulement de décharge de gaz est réduite continuellement ou progressivement dans une direction de décharge de gaz ; et
un organe de guidage de décharge (130) qui est inséré dans le trou traversant du support et présente un trajet d'écoulement de décharge de gaz (131) formé dans une partie centrale de celui-ci,
dans lequel une zone de section transversale du trajet d'écoulement de décharge de gaz est réduite continuellement ou progressivement dans la direction de décharge de gaz,
**caractérisé en ce que** le trajet d'écoulement de décharge de gaz présente une forme conique tronquée dans laquelle une surface inclinée formée sur une paroi interne (134) du trajet d'écoulement de décharge de gaz est incurvée de manière concave ou convexe et un trajet d'écoulement droit (136) ayant une zone de section transversale constante est formé du côté de la sortie (133) du trajet d'écoulement de décharge de gaz de manière à suivre le trajet d'écoulement en forme de cône tronqué,
ou **caractérisé en ce que** dans le trajet d'écoulement de décharge de gaz, un trajet d'écoulement en forme de cône tronqué (134A), dans lequel une surface inclinée formée sur une paroi intérieure de celui-ci est incurvée de manière concave, et un trajet d'écoulement en forme de cône tronqué (134B), dans lequel une surface inclinée est incurvée de manière convexe, sont formés consécutivement, leur zone de section transversale étant continuellement réduite,
ou **caractérisé en ce que** dans le trajet d'écoulement de décharge de gaz, un trajet d'écoulement en forme de cône tronqué, dans lequel une surface inclinée formée sur une paroi intérieure de celui-ci est incurvée de manière convexe, et un trajet d'écoulement en forme de cône tronqué, dans lequel une surface inclinée est incurvée de manière concave, sont formés consécutivement, leur zone de section transversale étant continuellement réduite.

2. Dispositif d'évent de gaz selon la revendication 1, dans lequel le trajet d'écoulement de décharge de gaz présente une forme conique tronquée.

3. Dispositif d' évent de gaz selon la revendication 1, dans lequel une saillie présentant un filetage à vis, un gaufrage ou un motif de forme rectiligne est formée sur une paroi interne du trajet d'écoulement de décharge de gaz.

4. Dispositif d'évent de gaz selon la revendication 1, dans lequel :
une partie de fixation (135) pour fixer l'organe de guidage de décharge au support fait saillie à partir d'une surface externe de l'organe de guidage de décharge ; et
un trou de fixation pour la fixation par vis du support est formé dans la partie de fixation.

5. Dispositif d'évent de gaz selon la revendication 1, dans lequel le support est fixé à l'organe de guidage de décharge en étant vissé.

6. Dispositif d'évent de gaz selon la revendication 1, dans lequel le disque d'évent est positionné en aval de l'organe de guidage de décharge sur la base de la direction de décharge de gaz.

7. Dispositif d'évent de gaz selon la revendication 1, dans lequel le disque d'évent comporte :
une partie périphérique externe de disque (121) fixée au support, et
une partie périphérique interne de disque (122) qui est formée d'un seul tenant avec la partie périphérique externe de disque pour former un corps unique, protège le trou traversant, et se rompt lorsque la pression prédéterminée est appliquée,
dans lequel une encoche (134) est formée dans la partie périphérique interne de disque de manière à se rompre lorsque la pression prédéterminée est appliquée.

8. Module de batterie (200) comprenant :
une pluralité de batteries secondaires ; et
un cadre de module (210) sur lequel sont montées les batteries secondaires,
un dispositif d'évent de gaz selon l'une quelconque des revendications 1 à 7, dans lequel le dispositif d'évent de gaz est fixé à un premier côté du cadre de module.

9. Module de batterie selon la revendication 8, dans lequel une première surface du support opposée à une seconde surface du support en contact avec le disque d'évent est en contact avec une surface extérieure du cadre de module.

10. Module de batterie selon la revendication 8, dans lequel le disque d'évent est en contact avec une surface interne du cadre de module.

11. Module de batterie selon la revendication 8, comprenant en outre un organe d'étanchéité pour étanchéifier un espace entre le cadre de module et une périphérie externe du dispositif d'évent de gaz.

12. Bloc-batterie comprenant :
au moins un module de batterie comportant une pluralité de batteries secondaires ; et un boîtier de bloc-batterie comportant un plateau sur lequel le module de batterie est monté et un couvercle de bloc qui recouvre le module de batterie,
un dispositif d'évent de gaz selon l'une quelconque des revendications 1 à 7, dans lequel le dispositif d'évent de gaz est fixé à un premier côté du boîtier de bloc-batterie.

13. Bloc-batterie selon la revendication 12, dans lequel une première surface du support opposée à une seconde surface du support en contact avec le disque d'évent est en contact avec une surface externe du boîtier de bloc-batterie.

14. Bloc-batterie selon la revendication 12, dans lequel le disque d'évent est en contact avec une surface interne du boîtier de bloc-batterie.

15. Bloc-batterie selon la revendication 12, comprenant en outre un organe d'étanchéité conçu pour étanchéifier un espace entre le boîtier de bloc-batterie et une périphérie externe du dispositif d'évent de gaz.
